(19) Europäisches Patentamt
European Patent Office
Office européen des brevets

(11) **EP 2 075 977 A1**

(12) **DEMANDE DE BREVET EUROPEEN**

(43) Date de publication:
**01.07.2009 Bulletin 2009/27**

(51) Int Cl.:
***H04L 29/06*** *(2006.01)*

(21) Numéro de dépôt: **08172873.5**

(22) Date de dépôt: **23.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **27.12.2007 FR 0760401**

(71) Demandeur: **FRANCE TELECOM**
**75015 Paris (FR)**

(72) Inventeurs:
• **Ansel, Pierre**
**92120, MONTROUGE (FR)**
• **Besson, Emmanuel**
**14200, HEROUVILLE SAINT-CLAIR (FR)**

(54) **Procédé d'établissement d'un critère de discrimination de paquets d'attaque et de paquets légitimes**

(57) L'invention concerne un procédé pour établir un critère de discrimination de paquets d'attaque et de paquets légitimes appartenant à un flux de paquets par analyse d'un échantillon dudit flux, le procédé étant **caractérisé en ce qu'**il comprend les étapes suivantes :
- caractérisation (11) des paquets de l'échantillon par des vecteurs respectifs dont les composantes correspondent à des variables calculées à partir des champs de paquet,
- détermination (12) d'un axe représentatif d'une dispersion des paquets de l'échantillon, à partir des vecteurs caractérisant lesdits paquets, et
- identification (13) d'une région de l'axe représentative des paquets d'attaque, ladite région représentant ledit critère de discrimination.

Figure 7

**Description**

L'invention concerne une technique d'établissement d'un critère de discrimination de paquets d'attaque et de paquets légitimes dans un flux de paquets à destination d'un service protégé, et de discrimination de paquets d'attaque et de paquets légitimes dans le flux dans un réseau de télécommunications.

Une attaque par déni de service est une attaque qui tend à rendre indisponible une entité de service. On parle d'attaque par déni de service ("DoS" pour "Denial of Service"), ou d'attaque par déni de service distribué ("DDoS" pour "Distributed Denial of Service") lorsque plusieurs machines sont à l'origine de l'attaque. Il existe plusieurs types d'attaques par déni de service. Un premier type d'attaque par déni de service utilise des requêtes spécifiques ayant pour rôle d'attaquer directement le fonctionnement de l'entité de service en lui demandant d'effectuer des actions non conformes. Un deuxième type d'attaque par déni de service, qualifié d'attaques par inondation, vise à dépasser, et donc à inonder, la capacité réseau de l'entité de service ou de la liaison de transmission par laquelle l'entité de service est reliée au réseau. Dans les deux cas d'attaque, des caractéristiques volumiques du trafic réseau à destination de l'entité de service augmentent soudainement.

Le traitement d'attaques par déni de service nécessite une analyse du flux puis une identification des paquets d'attaque en vue, par exemple, d'épurer le trafic des paquets d'attaque qu'il contient et de ne transmettre à l'entité de service à protéger que des paquets légitimes.

Il existe plusieurs techniques pour filtrer un trafic d'attaque de type déni de service distribué, notamment celles qui utilisent très largement les protocoles réseau, comme IP ou TCP (de l'anglais "Transmission Control Protocol"). Par exemple, dans le cas d'attaques par inondation appelées "synflooding" qui consistent à envoyer vers une entité que l'on veut attaquer une quantité très importante de messages TCP SYN de demandes d'ouverture de connexion afin d'épuiser les ressources de l'entité, un moyen de lutte consiste à utiliser un dispositif en coupure de flux appelé "syngateway". Ce dispositif en coupure intercepte tous les messages de demande de connexion vers l'entité à protéger, vérifie que la demande de connexion est une demande légitime et établit, ou n'établit pas, la connexion avec l'entité à protéger. A cette fin, le dispositif "syngateway" implémente par exemple un mécanisme appelé "syncookies". Avec ce mécanisme, le dispositif "syngateway" génère un numéro de séquence aléatoire en fonction du client d'où provient une demande de connexion. Ce numéro permet d'identifier formellement le client. La connexion n'est pas établie immédiatement à la réception d'un paquet TCP SYN de demande d'ouverture de connexion émis par le client. Par contre, si le client répond à un message SYN ACK renvoyé par le "syngateway" en réponse au message de demande de connexion SYN initial avec un message d'accusé de réception ACK, alors la connexion est établie entre le client et l'entité à protéger par le dispositif "syngateway". Cependant, cette méthode présente l'inconvénient d'être intrusive dans le sens où l'équipement "syngateway" traite les messages destinés à l'entité à protéger à la place de celle-ci. En effet, c'est le dispositif placé en coupure du flux qui gère toutes les connexions à destination de l'entité à protéger et qui établit ou n'établit pas la connexion. En outre, en termes de sécurité, des failles peuvent apparaître. Par exemple, si un pirate connaît la fonction qui permet de générer les numéros de séquence aléatoires, il peut se faire passer pour un client légitime en usurpant son adresse IP. Une connexion peut alors être établie entre la machine dont l'adresse a été usurpée et l'entité à protéger car reconnue par le dispositif comme légitime.

Il existe donc un besoin pour une méthode d'analyse de flux et d'identification de paquets d'attaque vis-à-vis d'une entité à protéger, qui agisse de façon passive, c'est-à-dire sans nécessiter l'établissement d'un dialogue avec les sources d'émission des flux de paquets.

L'invention répond à ce besoin en proposant un procédé pour établir un critère de discrimination de paquets d'attaque et de paquets légitimes appartenant à un flux de paquets par analyse d'un échantillon dudit flux, le procédé comprenant les étapes suivantes :

- caractérisation des paquets de l'échantillon par des vecteurs respectifs dont les composantes correspondent à des variables calculées à partir des champs de paquet,
- détermination d'un axe représentatif d'une dispersion des paquets de l'échantillon, à partir des vecteurs caractérisant lesdits paquets,

et étant caractérisé en ce qu'il comprend également une étape d'identification d'une région de l'axe représentative des paquets d'attaque, ladite région représentant ledit critère de discrimination.

De façon avantageuse, c'est un flux d'attaque qui est analysé pour établir un critère de discrimination de paquets d'attaque et de paquets légitimes. Ainsi, on considère que lors d'une attaque, le nombre de paquets d'attaque est supérieur au nombre de paquets légitimes. Avec le procédé selon l'invention, on discrimine de manière statistique le trafic d'attaque et le trafic légitime en s'appuyant sur une analyse de champs des en-têtes présents dans les paquets IP, TCP, UDP (de l'anglais "User Datagram Protocol"), ou ICMP (de l'anglais Internet Control Message Protocol") qui constituent le trafic. Le procédé selon l'invention utilise la méthode statistique d'Analyse en Composantes Principales (ACP) pour obtenir la meilleure métrique qui permet de faire cette discrimination. L'ACP, appliquée à des paquets d'un échantillon de flux, fournit au moins un axe représentatif de la dispersion des paquets de l'échantillon. L'invention retient l'axe qui conduit à la plus forte dispersion des paquets de l'échantillon et met le plus en évidence une singularité dans les paquets. Cette singularité correspond au résultat particulier d'une corrélation entre des champs d'en-tête de paquets qui n'existe pas entre paquets d'un trafic légitime puisqu'a priori, les paquets n'ont aucun lien entre eux. Au contraire, des paquets d'attaque qui émanent d'un ou de plusieurs attaquants et qui sont générés automatiquement présentent des points communs inhérents au caractère d'unicité du générateur qui en est à l'origine.

Une projection sur l'axe identifié de chaque vecteur qui caractérise un paquet de l'échantillon permet de mettre en évidence une région représentative des paquets d'attaque et une région représentative des paquets légitimes. L'analyse consiste donc à discriminer les paquets d'attaque et les paquets légitimes.

Ainsi, avec le procédé selon l'invention on ne regarde pas chacune des caractéristiques d'un paquet pour voir si elle correspond à une caractéristique d'un paquet légitime ou illégitime mais on regarde, de façon globale, si un paquet a les mêmes caractéristiques qu'un paquet d'attaque ou qu'un paquet légitime. Les performances liées au calcul pour effectuer une telle analyse sont donc bien meilleures que pour une analyse de chacune des caractéristiques d'un paquet. Par ailleurs, les performances en termes de capacité de détection sont meilleures dans la mesure où cette analyse s'appuie sur une corrélation des différentes caractéristiques d'un paquet.

La taille de l'échantillon est choisie en fonction de contraintes relatives à des temps de calcul et de consommation CPU pour une meilleure efficacité de la méthode d'analyse.

Avantageusement, on projette sur l'axe identifié les paquets de l'échantillon représentés par leurs vecteurs respectifs et on détermine une région de l'axe contenant le plus grand nombre de paquets projetés afin d'identifier la région représentant le critère de discrimination.

Dans une réalisation de l'invention on découpe l'axe en tranches et on détermine un ensemble de tranches contigües qui comprend le plus grand nombre de paquets projetés de l'échantillon afin de déterminer la région représentant le critère de discrimination.

Une découpe de l'axe en plages de valeurs et une projection des paquets sur l'axe identifié permet de comptabiliser le nombre de paquets de chaque plage. La ou les plages contigües comptabilisant le plus grand nombre de paquets est alors associée au trafic d'attaque puisque l'hypothèse initiale est que le trafic d'attaque est plus important que le trafic légitime. Un nouveau paquet entrant est alors analysé au regard de la métrique fournie par l'ACP par projection du vecteur associé au paquet sur l'axe identifié. Si l'analyse du paquet permet d'associer celui-ci à la plage de valeurs dans laquelle apparaît le plus grand nombre de paquets, alors il est identifié comme un paquet d'attaque.

Dans le procédé selon l'invention, les champs pris en compte dans les vecteurs caractérisant les paquets de l'échantillon sont sélectionnés parmi des champs d'en-tête de paquet et appartiennent au groupe comprenant type de service ("ToS"), longueur totale, identification, Flags, Position fragment, Time to Live ("TTL"), Protocole, adresse IP source, adresse IP destination, port destination TCP ou UDP, port source TCP ou UDP, numéro de séquence TCP, numéro d'acquittement TCP, flags TCP, taille de la fenêtre TCP, taille de l'entête TCP, checksum TCP ou UDP.

Parmi les informations figurant dans les en-têtes de paquets, les plus pertinents sémantiquement, et qui sont susceptibles de présenter des anomalies ont été choisis. Des champs qui ne varient pas ou qui ne traduisent pas une valeur intéressante n'ont pas été retenus.

Avantageusement, l'axe représentatif de la dispersion des paquets de l'échantillon est obtenu par application d'une méthode d'Analyse en Composantes Principales, ladite méthode fournissant au moins une valeur propre associée à un vecteur propre et ledit axe étant défini par le vecteur propre associé à la plus grande valeur propre.

Le procédé selon l'invention utilise une méthode statistique éprouvée d'Analyse en Composantes Principales pour trouver et analyser rapidement les singularités entre paquets.

De façon avantageuse, il est prévu une étape de test pour déterminer si, pour le flux d'attaque considéré, la méthode d'Analyse en Composantes Principales est opportune, au cours de laquelle on compare un indicateur (I) égal à la plus grande valeur propre associée à l'axe déterminé divisée par le nombre de champs des vecteurs caractérisant les paquets de l'échantillon à une valeur seuil ($I_s$).

Plus le trafic d'attaque est proche du trafic légitime du point de vue des champs d'en-tête étudiés et moins la valeur propre fournie par l'Analyse en Composantes Principales est grande. Inversement, plus le trafic d'attaque présente des singularités par rapport au trafic légitime et plus la valeur propre extraite est grande. Ce constat nécessite d'établir un critère indiquant que le procédé selon l'invention est efficace pour distinguer le trafic légitime du trafic d'attaque. Ainsi, si l'indicateur I est inférieur à une valeur seuil $I_s$, alors le procédé ne sera pas efficace pour analyser un flux en vue de discriminer les paquets d'attaque des paquets légitimes car le trafic analysé pourra aussi bien être constitué uniquement de paquets légitimes ou uniquement de paquets illégitimes. Une valeur seuil $I_s$, par exemple de l'ordre de 15% a été constatée expérimentalement.

L'invention concerne aussi un procédé de discrimination de paquets d'attaque et de paquets légitimes appartenant à un flux, caractérisé en ce que, un axe représentatif d'une dispersion de paquets d'un échantillon du flux et comprenant une région représentative de paquets d'attaque étant fourni, il comprend une étape de traitement d'un nouveau paquet, dans laquelle on caractérise le nouveau paquet par un vecteur dont les composantes correspondent à des variables calculées à partir des champs du paquet, on calcule une projection dudit vecteur caractérisant le nouveau paquet sur l'axe fourni et on vérifie si ladite projection appartient à la région de l'axe représentative de paquets d'attaque afin de déterminer s'il s'agit d'un paquet d'attaque.

Contrairement à des méthodes de détection d'attaque qui utilisent l'Analyse en Composantes Principales pour caractériser des attaques réseau dans un échantillon de trafic, aucune phase d'apprentissage préalable n'est nécessaire lors de la mise en oeuvre de l'invention. Ainsi, avec le procédé selon l'invention, on ne compare pas les caractéristiques du paquet entrant à des caractéristiques de paquets déjà étudiées, mais on essaie d'identifier s'il appartient, grâce à ses caractéristiques, à la région de l'axe d'étude qui regroupe la plus grande quantité de paquets qui par hypothèse est associée à du trafic d'attaque.

Cette analyse permet d'envisager de traiter en temps réel un trafic d'attaque en vue d'épurer ce trafic des paquets d'attaque qu'il contient. Le trafic qui n'est pas identifié comme du trafic d'attaque peut alors être acheminé vers l'entité initialement destinataire du trafic et visée par l'attaque en cours.

Une expérimentation du procédé de l'invention relative à un filtrage temps réel de paquets d'attaque a donné des résultats très concluants en termes d'efficacité et de performances.

L'invention concerne également un dispositif d'établissement d'un critère de discrimination de paquets d'attaque et de paquets légitimes appartenant à un flux de paquets, ledit dispositif comprenant :

- des moyens de caractérisation, agencés pour caractériser des paquets compris dans un échantillon du flux, un paquet étant caractérisé par un vecteur dont les composantes correspondent à des variables calculées à partir de champs de paquet,
- des moyens de détermination, agencés pour déterminer un axe représentatif d'une dispersion des paquets de l'échantillon, à partir des vecteurs caractérisant lesdits paquets, et
- des moyens d'identification, agencés pour identifier une région de l'axe représentative des paquets d'attaque, ladite région représentant ledit critère de discrimination.

L'invention concerne aussi un dispositif de discrimination de paquets d'attaque et de paquets légitimes appartenant à un flux, ledit dispositif comprenant :

- des moyens de caractérisation de nouveaux paquets, agencés pour caractériser un nouveau paquet par un vecteur dont les composantes correspondent à des variables calculées à partir de champs du paquet,
- des moyens de calcul, agencés pour calculer une projection du vecteur caractérisant le nouveau paquet sur un axe fourni comprenant une région représentative des paquets d'attaque, ledit axe étant représentatif d'une dispersion de paquets de l'échantillon du flux, et
- des moyens de vérification, agencés pour vérifier si ladite projection appartient à la région de l'axe représentative des paquets d'attaque afin de déterminer s'il s'agit d'un paquet d'attaque.

L'invention concerne aussi un système de filtrage de paquets d'attaque dans un flux de paquets comprenant des paquets d'attaque et des paquets légitimes, comprenant :

- un dispositif d'établissement d'un critère de discrimination de paquets d'attaque et de paquets légitimes dans un flux de paquets selon l'invention apte à discriminer les paquets d'attaque des paquets légitimes, et
- un dispositif de discrimination de paquets d'attaque et de paquets légitimes selon l'invention, apte à déterminer si un nouveau paquet dudit flux est un paquet d'attaque.

De façon avantageuse, les procédés de l'invention sont utilisés en combinaison pour filtrer en temps réel des paquets d'attaque dans un trafic à destination d'une entité à protéger. Ainsi, seul le trafic légitime est acheminé vers l'entité à protéger.

L'invention concerne également un programme d'ordinateur sur un support de données et chargeable dans la mémoire interne d'un ordinateur, le programme comprenant des portions de code pour l'exécution des étapes du procédé d'établissement d'un critère de discrimination de paquets d'attaque et de paquets légitimes selon l'invention lorsque le programme est exécuté sur ledit ordinateur.

L'invention porte également sur un moyen de stockage de données partiellement ou totalement amovible, comportant des instructions de code de programme informatique pour l'exécution des étapes du procédé d'établissement d'un critère de discrimination de paquets d'attaque et de paquets légitimes selon l'invention

L'invention concerne aussi un programme d'ordinateur sur un support de données et chargeable dans la mémoire interne d'un ordinateur, le programme comprenant des portions de code pour l'exécution des étapes du procédé de discrimination de paquets d'attaque et de paquets légitimes selon l'invention lorsque le programme est exécuté sur ledit ordinateur.

L'invention porte également sur un moyen de stockage de données partiellement ou totalement amovible, comportant des instructions de code de programme informatique pour l'exécution des étapes du procédé de discrimination de paquets d'attaque et de paquets légitimes selon l'invention.

De façon avantageuse, les procédés de l'invention sont utilisés en combinaison pour filtrer en temps réel des paquets d'attaque dans un trafic à destination d'une entité à protéger. Ainsi, seul le trafic légitime est acheminé vers l'entité à protéger.

De nombreux détails et avantages de l'invention seront mieux compris à la lecture de la description d'un mode particulier de réalisation en référence aux schémas annexés donnés à titre non limitatif et dans lesquels :

- la figure 1 présente les étapes du procédé d'établissement d'un critère de discrimination de paquets d'attaque et de paquets légitimes selon un mode de réalisation de l'invention ;
- la figure 2 présente les étapes du procédé de discrimination de paquets d'attaque et de paquets légitimes selon un mode de réalisation de l'invention ;
- la figure 3 est un exemple de répartition des projections d'un échantillon de paquets sur le vecteur propre fourni par l'Analyse en Composantes Principales selon l'invention.
- les figures 4a et 4b illustrent le choix d'un échantillon du flux et la mise à jour de l'échantillon lors de la réitération du procédé d'établissement d'un critère de discrimination selon l'invention ;
- la figure 5 représente un dispositif d'établissement d'un critère de discrimination de paquets d'attaque et de paquets légitimes selon un mode de réalisation de l'invention ;
- la figure 6 représente un dispositif de discrimination de paquets d'attaque et de paquets légitimes selon un mode de réalisation de l'invention ;
- la figure 7 illustre une architecture réseau qui met en oeuvre les procédés d'établissement d'un critère de discrimination et de discrimination de paquets d'attaque et de paquets légitimes selon l'invention.

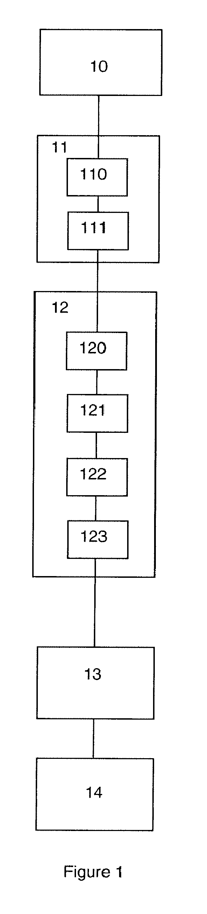

La figure 1 représente les étapes d'un mode de réalisation particulier du procédé pour établir un critère de discrimination de paquets d'attaque et de paquets légitimes appartenant à un flux de paquets par analyse d'un échantillon de ce flux, selon l'invention.

Dans une étape initiale 10 de prélèvement d'un échantillon, il est prélevé un échantillon du flux dans le flux de paquets identifié comme flux d'attaque vers une entité de service à protéger. Dans une première réalisation de l'invention, l'échantillon de flux prélevé s'étend sur une plage temporelle d'une durée déterminée $T_0$. A cette fin, chaque paquet $P_n$ de l'échantillon à destination du service à protéger est associé à une estampille temporelle $t_n$. Ainsi, appartiennent à l'échantillon de flux les paquets dont la différence entre l'estampille temporelle du plus récent paquet et leur estampille temporelle est inférieure à $T_0$. Notons N le nombre de paquets d'un échantillon de flux prélevé.

Dans une réalisation alternative de l'invention, l'échantillon de flux prélevé contient un nombre de paquets déterminé.

Dans une étape 11 de caractérisation des paquets de l'échantillon, il est procédé, dans une sous-étape 110 d'extraction, à l'extraction de champs d'entête des paquets de l'échantillon. Il est ainsi sélectionné, parmi l'ensemble des champs d'en-tête, un nombre m de champs d'en-tête pour chacun des N paquets de l'échantillon. Dans l'exemple particulier de la description, le nombre m de champs est égal à 23. Ces m champs sont utilisés pour définir des variables aléatoires dans une méthode d'analyse statistique de données, en l'espèce l'Analyse en Composantes Principales.

L'Analyse en Composantes Principales (ACP) est une méthode mathématique d'analyse de données qui consiste à rechercher les directions qui représentent le mieux les corrélations entre m variables aléatoires dans un espace à m dimensions. Cette méthode d'analyse permet de comprendre et de visualiser comment les effets de phénomènes a priori isolés se combinent.

Dans l'invention, les variables aléatoires utilisées sont déterminées à partir des m champs d'en-tête des paquets de l'échantillon prélevé. L'Analyse en Composantes Principales est d'abord utilisée pour analyser un échantillon de flux d'attaque contenant également du trafic légitime prélevé afin de définir un critère de discrimination des paquets d'attaque et des paquets légitimes. On verra par la suite qu'elle est également utilisée pour discriminer des paquets d'attaque et des paquets légitimes dans un flux.

On notera que l'ACP est fréquemment utilisée et citée dans la littérature relative à la sécurité des réseaux dans le but de définir des critères de détection d'attaque dans un réseau. L'ACP permet ainsi d'identifier la forme de paquets du trafic d'attaque à partir de caractéristiques obtenues par Analyse en Composantes Principales par observation d'échantillons de trafic. En revanche, cette technique n'a pas encore été utilisée pour établir un critère de discrimination de paquets d'attaque à partir d'un échantillon de flux d'attaque puis pour discriminer en temps réel les paquets d'attaque et les paquets sains à l'aide du critère établi.

Les m champs d'en-tête sélectionnés dans l'exemple particulier de la description sont les champs jugés comme les plus pertinents à analyser car susceptibles de présenter des anomalies.

Les m champs $C_i$, avec i =1, ..., 23, extraits sont les suivants :

- le champ "TOS" pour "Type Of Service", correspondant à la valeur de l'octet 2 de l'entête,
- la longueur totale du paquet, correspondant aux octets 3 et 4 de l'entête,
- le champ "identification", correspondant aux octets 5 et 6,
- le champ "Flags" correspondant à l'octet 7,
- le champ "Position fragment", correspondant à l'octet 8,
- le champ "Time To Live", ou "TTL",
- le champ protocole qui représente le type de données qui se trouve derrière l'entête IP,
- quatre champs correspondant aux quatre octets de l'adresse IP source,
- quatre champs correspondant aux quatre octets de l'adresse IP destination,
- le port destination TCP ou UDP, 0 s'il s'agit d'un autre protocole,
- le port source TCP ou UDP, 0 s'il s'agit d'un autre protocole,
- le numéro de séquence TCP, 0 s'il s'agit d'un autre protocole,
- le numéro d'acquittement, 0 s'il s'agit d'un autre protocole,
- les flags TCP, 0 s'il s'agit d'un autre protocole,
- la taille de la fenêtre TCP, 0 s'il s'agit d'un autre protocole,
- la taille de l'entête TCP, 0 s'il s'agit d'un autre protocole,
- le checksum TCP ou UDP, 0 s'il s'agit d'un autre protocole.

Chaque paquet d'indice k de l'échantillon, avec $1 \leq k \leq N$, est donc caractérisé par un vecteur $C^k$ à m composantes correspondant respectivement aux contenus des m champs d'en-tête sélectionnés, notés $C_i^k$ avec $1 \leq i \leq m$, m étant égal à 23.

Les informations relatives aux N paquets de l'échantillon et aux m champs relatifs à ces N paquets sont représentées sous forme d'une matrice M à m lignes d'indice i, avec $1 \leq i \leq m$, m étant ici égal à 23, et n colonnes d'indice k, avec $1 \leq k \leq N$. Les éléments de la matrice M sont notés $C_i^k$.

Dans une sous-étape 111 de détermination de variables aléatoires, Il est calculé pour chaque ligne d'indice i de la matrice M, contenant les éléments $C_i^k$ pour les paquets d'index k, avec $1 \leq k \leq N$, une variable aléatoire, notée $V_i$ possédant N occurrences $V_i^k$, avec $1 \leq k \leq N$. La k-ième occurrence de la variable $V_i$, notée $V_{i_i}^k$ représentative du i-ième champ, avec $1 \leq i \leq m$, des paquets d'index k, est centrée et normée selon le calcul suivant :

$$V_i^k = \frac{C_i^k - \overline{C_i}}{\sigma_i} \text{ , où } \overline{C_i} = \frac{1}{N} \sum_{k=1}^{N} C_i^k \text{ et } \sigma_i = \sqrt{\sum_{k=1}^{N} (C_i^k - \overline{C_i})^2}$$

Ainsi un paquet k de l'échantillon est caractérisé par un vecteur $V^k$ à m composantes $V_i^k$, $1 \leq i \leq m$, de variables aléatoires.

La variable $V_i$ est centrée dans le sens où la valeur de la moyenne de la ligne d'indice i, notée $\overline{C_i}$ est soustraite à chacun des éléments $C_i^k$ de la ligne d'indice i avant sommation. Le centrage permet de pallier le problème d'unités différentes des valeurs. En outre, la variable $V_i$ est normée dans le sens où la somme calculée est divisée par l'écart-type $\sigma_i$ de la ligne d'indice i.

On obtient ainsi un vecteur V des variables aléatoires à m composantes $V_i$ avec $1 \leq i \leq m$, étant rappelé que m=23 dans l'exemple particulier de la description.

Dans une étape 12 de détermination d'un axe représentatif de la dispersion des paquets de l'échantillon, l'Analyse en Composantes Principales est appliquée sur les variables aléatoires obtenues à l'étape 11. Cette étape comprend plusieurs sous-étapes.

Lors d'une sous-étape 120 de calcul de la matrice de corrélation, il est calculé à partir du vecteur V à m composantes $V_i$ une matrice de corrélation. La matrice de corrélation $\phi$ est une matrice carrée à m lignes et m colonnes, qui contient à la ligne i et à la colonne j un élément noté $\phi_{i,j}$ appelé covariance entre les variables $V_i$ et $V_j$ représentatif

d'une information sur la corrélation entre la variable $V_i$, avec $1 \leq i \leq m$, et la variable $V_j$, avec $1 \leq j \leq m$.

Lors d'une sous-étape 121 de diagonalisation, la matrice de corrélation $\phi$ ainsi obtenue à partir des variables $V_i$ est diagonalisée. La diagonalisation a pour objectif d'identifier la combinaison linéaire des variables aléatoires qui fournit la plus grande variance.

Après diagonalisation de la matrice $\phi$, lors d'une sous-étape 122 d'extraction d'une valeur propre et d'un vecteur propre, on extrait de la matrice diagonale $\phi$ la valeur propre $v$ la plus forte ainsi que le vecteur propre $P$ associé. Le vecteur propre P est un vecteur à m composantes notées $p_i$, $1 \leq i \leq m$ (avec ici m=23). Il définit un axe A dans un espace à m dimensions (les m directions étant respectivement associées aux m champs d'en-tête sélectionnés) pour laquelle la variance de l'échantillon est la plus forte. Cet axe définit des singularités dans le trafic qu'il s'agit d'identifier ensuite. Le vecteur P est représentatif de la plus forte dispersion des paquets de l'échantillon.

Enfin, dans une sous-étape 123 de projection, on projette chaque vecteur $V^k$ de variables aléatoires caractérisant le paquet k de l'échantillon et comprenant les composantes $V_i^k$ pour $1 \leq i \leq m$, sur l'axe défini par le vecteur $P$ en appliquant le produit scalaire :

$$\left\langle P \middle| V^k \right\rangle$$

La projection du vecteur $V^k$ de variables aléatoires caractérisant le paquet k de l'échantillon, notée $Z^k$, s'exprime donc par :

$$z^k = \sum_{i=1}^{23} p_i V_i^k$$

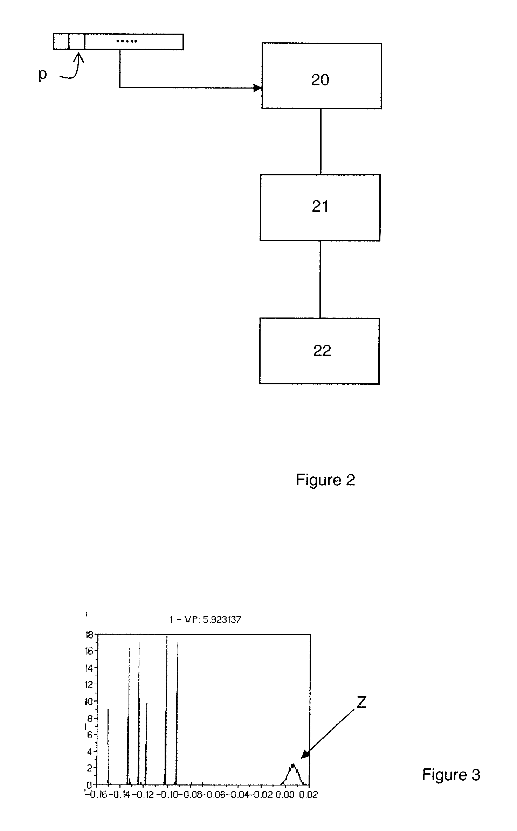

Dans une étape 13 d'identification d'un critère de discrimination de paquets d'attaque et de paquets légitimes, on analyse les projections des vecteurs de variables aléatoires caractérisant les paquets de l'échantillon sur l'axe A défini par le vecteur propre P, et on détermine la répartition en nombre de paquets projetés par tranche de valeurs de $z^k$. Une tranche de valeurs de $z^k$ s'entend ici d'une plage de valeurs de $z^k$ de longueur fixe sur l'axe A. Lors de la projection des paquets sur l'axe A et du comptage des paquets par plage de valeurs de $z^k$, on obtient une répartition qui permet de distinguer les paquets légitimes des paquets d'attaque. On observe ainsi que les paquets d'attaque forment un amas qui s'étend sur un ensemble de tranches contigües. L'amas contient le plus grand nombre de paquets, ce nombre étant au moins égal à 50% du nombre de paquets de l'échantillon prélevé. Une telle répartition est illustrée par la figure 3. Sur la figure 3, la projection des paquets d'attaque est visible sur la partie droite (Z) de la courbe, pour les abscisses situées à peu près entre -0.01 et 0.02. Cette zone comprend le plus grand nombre de paquets. La projection des paquets légitimes est visible sur la partie gauche de la courbe ; ils apparaissent comme des pics entre les abscisses -0.16 et -0.08. Le critère de discrimination des paquets d'attaque des paquets légitimes est associé à cette région de l'axe qui contient le plus grand nombre de paquets projetés.

Cet amas de paquets s'explique d'une part par le fait que l'on analyse un trafic d'attaque qui par hypothèse contient plus de paquets d'attaque que de paquets légitimes et d'autre part, par le fait que l'ACP effectuée a permis d'identifier des singularités dans le trafic qui caractérisent le trafic d'attaque.

Pour ce qui concerne la répartition des paquets légitimes et des paquets d'attaque, il apparaît que plus la variance associée au premier vecteur propre P est grande, et plus l'amas de paquets associé au trafic d'attaque est éloigné des pics associés au trafic légitime. Cela s'explique par le fait que plus un trafic d'attaque imite les paquets de trafic sain et plus le vecteur propre est faible car il est difficile de mettre en évidence les combinaisons de champs d'en-tête qui permettent de distinguer les paquets les uns des autres.

Dans une réalisation particulière de l'invention, une étape 14 de test permet de déterminer s'il est opportun vis-à-vis du flux d'attaque considéré d'utiliser l'Analyse en Composantes Principales pour discriminer les paquets d'attaque et les paquets légitimes. Ce test repose sur le constat que plus le trafic d'attaque est proche du trafic légitime du point de vue des champs étudiés et moins la valeur propre extraite au moyen de l'Analyse en Composantes Principales est grande et moins la variance entre les champs est grande. Inversement, plus le trafic d'attaque présente des singularités par rapport au trafic légitime, plus la valeur propre extraite est grande. Ce constat permet de définir un critère de test pour déterminer s'il est opportun d'utiliser l'Analyse en Composantes Principales. L'indicateur suivant est utilisé :

$$I = \frac{v}{D}$$

Où $v$ est la valeur propre la plus grande de l'ACP et D la dimension de l'espace des variables aléatoires, en l'occurrence 23.

Expérimentalement, il a été constaté que lorsque l'indicateur $I$ est inférieur à une valeur seuil $I_s$, alors le trafic est fortement susceptible d'être constitué uniquement de paquets illégitimes ou uniquement de paquets légitimes. La méthode d'Analyse en Composantes Principales n'est pas opportune dans ce cas. En revanche, si l'indicateur $I$ est supérieur à une valeur seuil $I_s$ alors la technique de filtrage de paquets d'attaque est applicable. Une valeur seuil appropriée $I_s$ est par exemple de l'ordre de 15%.

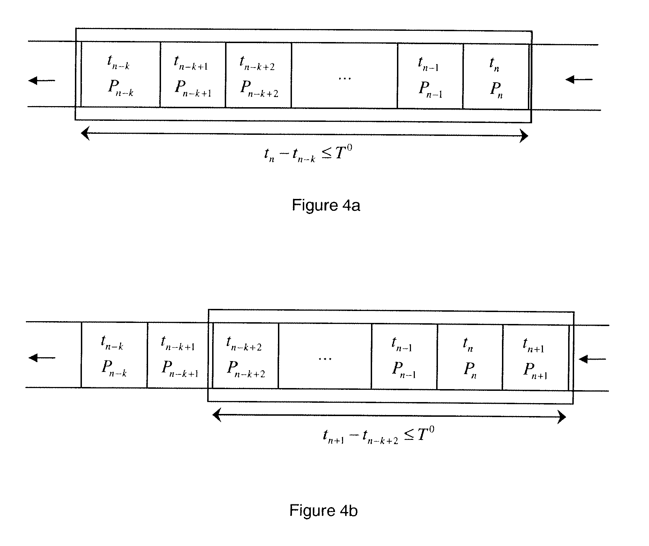

Il est à noter que les étapes 10, 11, 12, 13 de prélèvement d'un échantillon, de caractérisation des paquets de l'échantillon, de détermination d'un axe représentatif de la dispersion des paquets de l'échantillon, d'identification d'une région de l'axe représentative des paquets d'attaque, et le cas échéant l'étape 14 de test sont répétées de manière récurrente au cours du temps. Cela permet de mettre à jour régulièrement le critère de discrimination à partir des derniers paquets reçus à destination de l'entité de service à protéger. Les figures 4a et 4b illustrent la manipulation d'un échantillon de flux selon l'invention lorsque les étapes 10, 11, 12, 13, voire 14 sont réitérées. La figure 4a représente schématiquement un échantillon prélevé dans le flux qui s'étend sur une plage temporelle $T_0$. La figure 4b schématise la mise à jour de l'échantillon pour la prise en compte d'un nouveau paquet $P_{n+1}$. L'échantillon est représenté sur la figure 4a par la fenêtre qui couvre du paquet $P_{n-k}$ au paquet $P_n$. Lorsque l'on met à jour l'échantillon pour prendre en compte le nouveau paquet $P_{n+1}$ comme illustré par la figure 4b, la tête de la fenêtre est décalée de telle sorte que le nouveau paquet y entre et la queue de la fenêtre est avancée tant que la différence entre $t_{n+1}$ et l'estampille temporelle du plus ancien paquet est supérieure à $T_0$. La mise à jour de l'échantillon effectué à l'étape 10 et la réitération des étapes 11, 12, 13, voire de l'étape 14 peut se produire à l'arrivée d'un paquet ou d'un nombre prédéterminé de paquets, ou périodiquement. Si le procédé de l'invention est utilisé pour filtrer en temps réel des paquets d'attaque dans un flux à destination d'une entité à protéger, alors le choix pour mettre à jour l'échantillon sera un compromis entre temps de calcul et efficacité de la méthode.

Une fois établi le critère de discrimination des paquets d'attaque et des paquets légitimes selon les étapes décrites précédemment et la région de l'axe A correspondant à des paquets d'attaque identifiée, il s'agit d'identifier si un nouveau paquet est un paquet d'attaque, autrement dit de discriminer les paquets d'attaque et les paquets légitimes dans un flux. La figure 2 présente les étapes relatives à une réalisation du procédé de discrimination de paquets d'attaque et de paquets légitimes appartenant à un flux selon l'invention.

Pour identifier si un nouveau paquet entrant $p$ est un paquet d'attaque, on calcule une projection de ce nouveau paquet entrant, caractérisé par un vecteur de variables aléatoires, sur l'axe A obtenu à l'étape 12 du procédé d'établissement d'un critère de discrimination.

Plus précisément, dans une étape initiale 20, on détermine pour le nouveau paquet entrant $p$, un vecteur $C_i^p$, $1 \leq i \leq m$, à m composantes. Ces m composantes correspondent respectivement aux contenus des m champs d'en-tête du paquet, sélectionnés pour l'analyse de l'échantillon de flux d'attaque à l'étape 11. Puis, pour calculer les composantes $V_i^p$, $1 \leq i \leq m$, du vecteur $V^p$ de variables aléatoires caractérisant le paquet p, on utilise alors la valeur des champs $C_i^p$, ainsi que, pour moyenne, la moyenne $\overline{C_i}$, et pour écart-type, l'écart-type $\sigma_i$ calculés sur un échantillon prélevé courant. Dans une réalisation de l'invention, l'échantillon prélevé courant est un échantillon comprenant le nouveau paquet entrant. Dans une réalisation alternative de l'invention, il est également possible d'utiliser les valeurs $\overline{C_i}$ et $\sigma_i$ calculées au cours de la sous-étape 111 de détermination des variables aléatoires en admettant l'hypothèse que ces valeurs évoluent peu au cours du temps si les caractéristiques de l'attaque ne changent pas au cours du temps, c'est-à-dire si on trouve toujours la même répartition entre le trafic d'attaque et le trafic légitime et le même type de trafic d'attaque.

Dans une étape 21 de projection du nouveau paquet, on projette le vecteur $V^p$ associé au nouveau paquet entrant $p$ obtenu à l'étape précédente sur l'axe A associé au vecteur propre P obtenu à l'étape 12 en calculant le produit scalaire entre le vecteur $V^p$ et le vecteur P. On note $z(p)$ la projection du vecteur $V^p$ sur l'axe A.

Dans une étape 22 de vérification, on vérifie à quelle tranche de valeurs la projection $z(p)$ du nouveau paquet entrant appartient. Si elle appartient à la région représentative des paquets d'attaque identifiée à l'étape 13, alors le nouveau paquet entrant $p$ est identifié comme paquet d'attaque. Sinon, le nouveau paquet entrant $p$ est identifié comme paquet légitime.

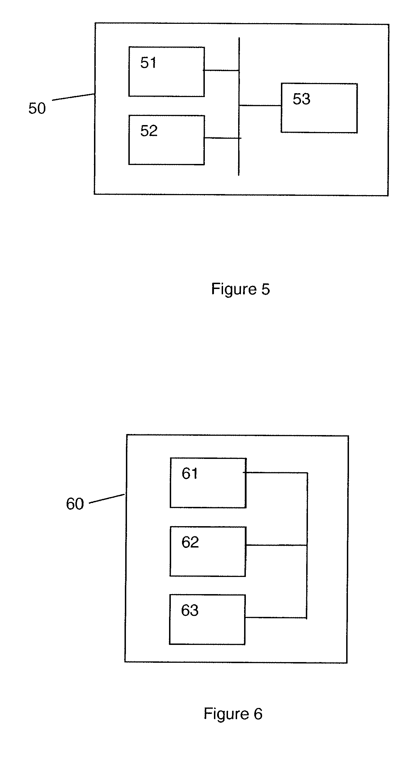

Un dispositif d'établissement d'un critère de discrimination de paquets d'attaque et de paquets légitimes appartenant à un flux selon un mode particulier de réalisation de l'invention va maintenant être décrit en relation avec la figure 5.

Un dispositif 50 d'établissement d'un critère de discrimination de paquets d'attaque est agencé pour caractériser les paquets d'un échantillon prélevé dans un flux d'attaque, déterminer un axe représentatif de la dispersion de paquets de l'échantillon et identifier une région de l'axe représentative des paquets d'attaque.

Le dispositif 50 comprend :

- un module 51 de caractérisation des paquets d'un échantillon prélevé dans un flux d'attaque. Dans une première réalisation de l'invention l'échantillon prélevé est associé à une plage temporelle $T_0$. Dans un deuxième mode de réalisation, l'échantillon prélevé contient un nombre de paquets fixé. Le module 51 de caractérisation des paquets est agencé pour sélectionner, parmi les champs d'en-tête des paquets de l'échantillon, un nombre m de champs et pour calculer, à partir de ces m champs, m variables aléatoires qui caractérisent lesdits paquets. Dans l'exemple particulier de la description, 23 champs d'entête ont été sélectionnés ; ce sont les 23 champs jugés comme les plus pertinents à analyser car susceptibles de présenter des anomalies. Ainsi, chaque paquet de l'échantillon est caractérisé par un vecteur dont les composantes sont les m variables calculées à partir des champs sélectionnés d'en-tête du paquet.
- un module 52 de détermination d'un axe représentatif d'une dispersion des paquets de l'échantillon à partir des vecteurs caractérisant lesdits paquets tels que fournis par le module 51 de caractérisation des paquets. Le module 52 de détermination effectue une Analyse en Composantes Principales sur les paquets de l'échantillon caractérisés chacun par les m variables aléatoires. L'ACP produit au moins un vecteur propre associé à une valeur propre, chaque vecteur propre fournissant des informations sur la dispersion des paquets de l'échantillon par rapport à l'axe que ce vecteur propre définit. Ainsi, l'ACP fournit au moins un axe représentatif de la dispersion des paquets de l'échantillon. L'axe associé à la plus grande valeur propre est celui qui fournit la plus forte dispersion des paquets ; il correspond à la variance la plus grande de l'échantillon.
- un module 53 d'identification, agencé pour identifier une région de l'axe représentative des paquets d'attaque. Le module 53 effectue une projection des vecteurs qui caractérisent les paquets de l'échantillon sur l'axe représentatif de l'échantillon identifié par le module 52 de détermination de l'axe, et compte par tranche de valeurs sur l'axe, le nombre de paquets projetés. La région de l'axe représentative des paquets d'attaque est alors identifiée comme étant la région où les paquets d'attaque projetés forment un amas qui s'étend sur un ensemble de tranches contigües. L'amas contient le plus grand nombre de paquets.

Les modules 51, 52 et 53 qui mettent en oeuvre les étapes du procédé d'établissement d'un critère de discrimination de paquets d'attaque et de paquets légitimes sont de préférence des modules logiciels comprenant des instructions logicielles pour faire exécuter les étapes de procédé décrit précédemment par le dispositif 50 d'établissement d'un critère de discrimination.

L'invention concerne également un dispositif de discrimination de paquets d'attaque et de paquets légitimes dans un flux décrit en relation avec la figure 6.

Un dispositif 60 de discrimination de paquets est agencé pour traiter de nouveaux paquets entrants du flux et décider si un nouveau paquet est un paquet d'attaque ou non.

Le dispositif 60 de discrimination de paquets comprend :

- un module 61 de caractérisation du nouveau paquet, agencé pour caractériser le nouveau paquet par un vecteur dont les m composantes sont des variables calculées à partir de champs d'en-tête selon la même liste de champs que celle utilisée par le dispositif 50 d'établissement d'un critère de discrimination de paquets,
- un module 62 de calcul, agencé pour calculer la projection du vecteur associé au nouveau paquet sur l'axe fourni par le module 52 du dispositif 50 d'établissement d'un critère de discrimination de paquets,
- un module 63 de vérification, agencé pour vérifier si la projection du vecteur associé au nouveau paquet appartient à la zone de l'axe représentative des paquets d'attaque telle qu'identifiée par le module 53 d'identification du dispositif 50 établissement d'un critère de discrimination de paquets.

Les modules 61, 62 et 63 qui mettent en oeuvre les étapes du procédé d'identification de paquets d'attaque selon l'invention sont de préférence des modules logiciels comprenant des instructions logicielles pour faire exécuter les étapes de procédé décrit précédemment par le dispositif 60 de discrimination de paquets d'attaque et de paquets légitimes.

Les modules logiciels 51, 52, 53 du dispositif 50 et les modules 61, 62 et 63 du dispositif 60 peuvent être stockés dans, ou transmis par, un support de données. Celui-ci peut être un support matériel de stockage, par exemple un CD-ROM, une disquette magnétique ou un disque dur, ou bien un support de transmission tel qu'un signal ou un réseau de télécommunication.

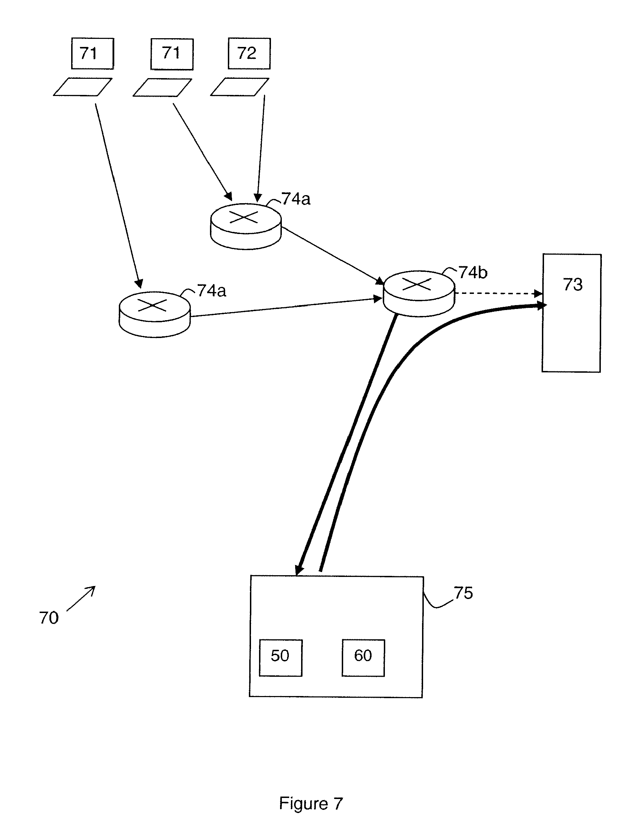

L'invention concerne également un système d'analyse de flux et d'identification de paquets d'attaque. Un tel système est illustré par la figure 7 qui représente un exemple d'architecture de réseau.

Dans une architecture réseau 70, des terminaux 71, 72 envoient du trafic vers une entité de service 73 que l'on souhaite protéger. Dans cet exemple, les terminaux 71 envoient du trafic d'attaque et le terminal 72 envoie du trafic légitime vers l'entité de service 73. Le trafic légitime et le trafic d'attaque sont acheminés dans le réseau par des routeurs 74a, 74b. On suppose que le routeur 74b, proche de l'entité de service 63 géographiquement est agencé pour détecter qu'une attaque est en cours vers l'entité de service 73 et pour dévier tout le trafic à destination de l'entité 73 vers un système 75 selon l'invention. Le système 75 est agencé pour filtrer en temps réel le trafic d'attaque à destination de l'entité de service 73 à protéger et pour réacheminer vers l'entité 73 le trafic épuré de ses paquets d'attaque. A cette fin, le système 75 comprend un dispositif 50 d'établissement d'un critère de discrimination de paquets d'attaque et de paquets légitimes selon l'invention et un dispositif 60 de discrimination de paquets d'attaque et de paquets légitimes. Le flux redirigé vers le système 75 est traité selon les procédés de l'invention : un échantillon de flux est prélevé et analysé selon le procédé d'établissement d'un critère de discrimination de paquets d'attaque et de paquets légitime selon l'invention et tout nouveau paquet du flux est identifié comme étant un paquet d'attaque ou non par le procédé de discrimination de paquets d'attaque et de paquets légitimes selon l'invention.

**Revendications**

1. Procédé pour établir un critère de discrimination de paquets d'attaque et de paquets légitimes appartenant à un flux de paquets par analyse d'un échantillon dudit flux, le procédé comprenant les étapes suivantes :

   - caractérisation (11) des paquets de l'échantillon par des vecteurs respectifs dont les composantes correspondent à des variables calculées à partir des champs de paquet,
   - détermination (12) d'un axe représentatif d'une dispersion des paquets de l'échantillon, à partir des vecteurs caractérisant lesdits paquets,

   et étant **caractérisé en ce qu'**il comprend également une étape d'identification (13) d'une région de l'axe représentative des paquets d'attaque, ladite région représentant ledit critère de discrimination.

2. Procédé selon la revendication 1, dans lequel, on projette sur l'axe les paquets de l'échantillon représentés par leurs vecteurs respectifs et on détermine une région de l'axe contenant le plus grand nombre de paquets projetés afin d'identifier la région représentant le critère de discrimination.

3. Procédé selon la revendication 2, dans lequel on découpe l'axe en tranches et on détermine un ensemble de tranches contigües qui comprend le plus grand nombre de paquets projetés de l'échantillon afin de déterminer la région représentant le critère de discrimination.

4. Procédé selon l'une des revendications précédentes dans lequel les champs pris en compte dans les vecteurs caractérisant les paquets de l'échantillon sont sélectionnés parmi des champs d'en-tête de paquet et appartiennent au groupe comprenant type de service ("ToS"), longueur totale, identification, Flags, Position fragment, Time to Live ("TTL"), Protocole, adresse IP source, adresse IP destination, port destination TCP ou UDP, port source TCP ou UDP, numéro de séquence TCP, numéro d'acquittement TCP, flags TCP, taille de la fenêtre TCP, taille de l'entête TCP, checksum TCP ou UDP.

5. Procédé selon l'une des revendications précédentes, dans lequel l'axe représentatif de la dispersion des paquets de l'échantillon est obtenu par application d'une méthode d'Analyse en Composantes Principales, ladite méthode fournissant au moins une valeur propre associée à un vecteur propre et ledit axe étant défini par le vecteur propre associé à la plus grande valeur propre.

6. Procédé selon l'une des revendications précédentes dans lequel, il est prévu une étape (14) de test pour déterminer si, pour le flux d'attaque considéré, la méthode d'Analyse en Composantes Principales est opportune, au cours de laquelle on compare un indicateur (I) égal à la plus grande valeur propre associée à l'axe déterminé divisée par le nombre de champs des vecteurs caractérisant les paquets de l'échantillon à une valeur seuil ($I_s$).

7. Procédé de discrimination de paquets d'attaque et de paquets légitimes appartenant à un flux, **caractérisé en ce que**, un axe représentatif d'une dispersion de paquets d'un échantillon du flux et comprenant une région représentative de paquets d'attaque étant fourni, il comprend une étape de traitement d'un nouveau paquet, dans laquelle on caractérise (20) le nouveau paquet par un vecteur dont les composantes correspondent à des variables calculées à partir des champs du paquet, on calcule (21) une projection dudit vecteur caractérisant le nouveau paquet sur l'axe fourni et on vérifie (22) si ladite projection appartient à la région de l'axe représentative de paquets d'attaque afin de déterminer s'il s'agit d'un paquet d'attaque.

8. Dispositif (50) d'établissement d'un critère de discrimination de paquets d'attaque et de paquets légitimes appartenant à un flux de paquets, ledit dispositif comprenant :

   - des moyens (51) de caractérisation, agencés pour caractériser des paquets compris dans un échantillon du flux, un paquet étant **caractérisé par** un vecteur dont les composantes correspondent à des variables calculées à partir de champs du paquet,
   - des moyens (52) de détermination, agencés pour déterminer un axe représentatif d'une dispersion des paquets de l'échantillon, à partir des vecteurs caractérisant lesdits paquets, et
   - des moyens (53) d'identification, agencés pour identifier une région de l'axe représentative des paquets d'attaque, ladite région représentant ledit critère de discrimination.

9. Dispositif (60) de discrimination de paquets d'attaque et de paquets légitimes appartenant à un flux, ledit dispositif comprenant :

   - des moyens (61) de caractérisation de nouveaux paquets, agencés pour caractériser un nouveau paquet par un vecteur dont les composantes correspondent à des variables calculées à partir de champs du paquet,
   - des moyens (62) de calcul, agencés pour calculer une projection du vecteur caractérisant le nouveau paquet sur un axe fourni comprenant une région représentative des paquets d'attaque, ledit axe étant représentatif d'une dispersion de paquets de l'échantillon du flux, et
   - des moyens (63) de vérification, agencés pour vérifier si ladite projection appartient à la région de l'axe représentative des paquets d'attaque afin de déterminer s'il s'agit d'un paquet d'attaque.

10. Système (70) de filtrage de paquets d'attaque dans un flux de paquets comprenant des paquets d'attaque et des paquets légitimes, comprenant :

   - un dispositif (50) d'établissement d'un critère de discrimination de paquets d'attaque et de paquets légitimes dans un flux de paquets selon la revendication 8 apte à discriminer les paquets d'attaque des paquets légitimes, et
   - un dispositif (60) de discrimination de paquets d'attaque et de paquets légitimes selon la revendication 9, apte à déterminer si un nouveau paquet dudit flux est un paquet d'attaque.

11. Programme d'ordinateur sur un support de données et chargeable dans la mémoire interne d'un ordinateur, le programme comprenant des portions de code pour l'exécution des étapes du procédé selon l'une quelconque des revendications 1 à 6 lorsque le programme est exécuté sur ledit ordinateur.

12. Moyen de stockage de données partiellement ou totalement amovible, comportant des instructions de code de programme informatique pour l'exécution des étapes d'un procédé selon l'une quelconque des revendications 1 à 6.

13. Programme d'ordinateur sur un support de données et chargeable dans la mémoire interne d'un ordinateur, le programme comprenant des portions de code pour l'exécution des étapes du procédé selon la revendication 7 lorsque le programme est exécuté sur ledit ordinateur.

14. Moyen de stockage de données partiellement ou totalement amovible, comportant des instructions de code de programme informatique pour l'exécution des étapes d'un procédé selon la revendication 7.

Figure 1

Figure 2

1 – VP: 5.923137

Figure 3

| $t_{n-k}$ $P_{n-k}$ | $t_{n-k+1}$ $P_{n-k+1}$ | $t_{n-k+2}$ $P_{n-k+2}$ | ... | $t_{n-1}$ $P_{n-1}$ | $t_n$ $P_n$ |
|---|---|---|---|---|---|

$$t_n - t_{n-k} \leq T^0$$

Figure 4a

| $t_{n-k}$ $P_{n-k}$ | $t_{n-k+1}$ $P_{n-k+1}$ | $t_{n-k+2}$ $P_{n-k+2}$ | ... | $t_{n-1}$ $P_{n-1}$ | $t_n$ $P_n$ | $t_{n+1}$ $P_{n+1}$ |
|---|---|---|---|---|---|---|

$$t_{n+1} - t_{n-k+2} \leq T^0$$

Figure 4b

50

51

52

53

Figure 5

60

61

62

63

Figure 6

Figure 7

**EP 2 075 977 A1**

| | Europäisches Patentamt<br>European Patent Office<br>Office européen des brevets | **RAPPORT DE RECHERCHE EUROPEENNE** | Numéro de la demande<br>EP 08 17 2873 |
|---|---|---|---|

### DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE    (IPC) |
|---|---|---|---|
| X | LABIB K ET AL:  "AN APPLICATION OF PRINCIPAL COMPONENT ANALYSIS TO THE DETECTION AND VISUALIZATION OF COMPUTER NETWORK ATTACKS"<br>ANNALES DES TELECOMMUNICATIONS - ANNALS OF TELECOMMUNICATIONS, GET LAVOISIER, PARIS, FR,<br>vol. 61, no. 1/02,<br>1 janvier 2006 (2006-01-01), pages 218-234, XP001241065<br>ISSN: 0003-4347<br>* section V.2 *<br>* section VI.1; table II *<br>----- | 1-14 | INV.<br>H04L29/06 |
| X | LAKHINA A ET AL:  "DIAGNOSING NETWORK-WIDE TRAFFIC ANOMALIES"<br>ACM COMPUTER COMMUNICATION REVIEW, NEW YORK, NY, US,<br>vol. 34, no. 4,<br>1 octobre 2004 (2004-10-01), pages 219-230, XP001224051<br>ISSN: 0146-4833<br>* section 5 *<br>----- | 1-14 | |
| A | HONGLI LUO ET AL:  "The Protection of QoS for Multimedia Transmission against Denial of Service Attacks"<br>IEEE INTERNATIONAL SYMPOSIUM ON MULTIMEDIA, 12 décembre 2005 (2005-12-12),<br>- 14 décembre 2005 (2005-12-14) pages 695-700, XP010870604<br>ISBN: 978-0-7695-2489-4<br>* section 2.1.2 *<br>* section 2.1.3 *<br>----- | 1-14 | **DOMAINES TECHNIQUES RECHERCHES**   (IPC)<br><br>H04L |
| A | US 2003/108042 A1 (SKILLICORN DAVID [CA] ET AL) 12 juin 2003 (2003-06-12)<br>* alinéas [0045] - [0051]; figure 3 *<br>----- | 1-14 | |

Le présent rapport a été établi pour toutes les revendications

| Lieu de la recherche | Date d'achèvement de la recherche | Examinateur |
|---|---|---|
| Munich | 23 février 2009 | Tabery, Peter |

CATEGORIE DES DOCUMENTS CITES

X : particulièrement pertinent à lui seul
Y : particulièrement pertinent en combinaison  avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
  ..............................................................................................
& : membre de la même famille, document  correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 08 17 2873

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-02-2009

| Document brevet cité<br>au rapport de recherche | Date de<br>publication | Membre(s) de la<br>famille de brevet(s) | Date de<br>publication |
|---|---|---|---|
| US 2003108042 A1 | 12-06-2003 | CA 2313908 A1 | 14-01-2002 |

EPO FORM P0460